# EUROPÄISCHE PATENTSCHRIFT

(11) **EP 1 160 470 B1**
(45) Veröffentlichungstag und Bekanntmachung des Hinweises auf die Patenterteilung: **29.12.2004**
(21) Anmeldenummer: 01111829.6
(22) Anmeldetag: 16.05.2001
(51) Int. Cl.: F16C 25/08, F16C 27/04

(54) **Arbeitsspindelanordnung**
Working spindle arrangement
Dispositif de broche dans une machine-outil

(30) Priorität: 31.05.2000 DE 10027187
(43) Veröffentlichungstag der Anmeldung: 05.12.2001
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: HOEGER, STELLRECHT & PARTNER Patentanwälte

(56) Entgegenhaltungen:
- DE-A- 19 818 634
- US-A- 4 226 485
- US-A- 5 364 194

## Beschreibung

Die Erfindung betrifft eine Arbeitsspindelanordnung für eine Werkzeugmaschine, umfassend ein Spindelgehäuse, eine Arbeitsspindel, eine vordere Lagereinheit, welche die Arbeitsspindel um ihre Spindelachse im wesentlichen spielfrei drehbar und in Richtung der Spindelachse im wesentlichen spielfrei feststehend relativ zum Spindelgehäuse lagert, eine hintere Lagereinheit, welche die Arbeitsspindel im Abstand von der ersten Lagereinheit um die Spindelachse drehbar, jedoch in Richtung der Spindelachse eine Bewegung zulassend lagert.

Bei den bekannten Arbeitsspindelanordnungen wird im Bereich der hinteren Lagereinheit üblicherweise ein spielbehaftetes Lager eingesetzt, welches jedoch hinsichtlich der Laufgenauigkeit die Anforderungen an eine möglichst hochpräzise Lagerung der Arbeitsspindel nicht erfüllt.

Weiterhin kann man gemäß Dokument DE-198 18634, auf dem der Oberbegriff von Anspruch 1 basiert, Fälle unterscheiden, bei denen jeweils im Bereich der einzelnen Lagereinheit, das heißt der vorderen oder der hinteren Lagereinheit, die Wälzlager untereinander oder gegeneinander vorgespannt sind und dann zwischen den Lagereinheiten keine Vorspannkraft wirkt oder Fälle, in denen die Wälzlager der jeweiligen Lagereinheiten untereinander nicht vorgespannt sind und somit zwischen den jeweiligen Lagereinheiten eine Vorspannkraft wirkt.

Der Erfindung liegt daher die Aufgabe zugrunde, eine Arbeitsspindelahbrdnung der gattungsgemäßen Art derart zu verbessern, daß einerseits eine hochpräzise Lagerung möglich ist, andererseits aber auch die Möglichkeit besteht, Wärmeausdehnungen der Arbeitsspindel im Bereich der hinteren Lagereinheit auszugleichen.

Diese Aufgabe wird durch eine Arbeitsspindelanordnung gemäß Anspruch 1 gelöst.

Der Vorteil der erfindungsgemäßen Lösung ist darin zu sehen, daß im Bereich der hinteren Lagereinheit mit vorgespannten Wälzlagern eine spielfreie Lagerung sowohl in radialer Richtung als auch in axialer Richtung in der Lageraufnahme erfolgt, daß aber die Lageraufnahme selbst aufgrund des Deformationselements in der Lage ist, sich in Richtung der Spindelachse relativ zum Spindelgehäuse zu bewegen, um damit die Möglichkeit zu schaffen, Längenausdehnungen der Arbeitsspindel, die sich auf die Position der hinteren Lagereinheit relativ zur vorderen Lagereinheit auswirken, auszugleichen.

Besonders vorteilhaft ist es für eine möglichst präzise Lagerung der Arbeitsspindel, wenn das Deformationselement die Lageraufnahme in radialer Richtung zur Spindelachse gegenüber dem Spindelgehäuse im wesentlichen steif führt und lediglich eine Bewegung der Lageraufnahme in Richtung der Spindelachse zuläßt.

Besonders vorteilhaft läßt sich eine derartige im wesentlichen steife Führung der Lageraufnahme in radialer Richtung zur Spindelachse dann realisieren, wenn sich das Deformationselement in einer quer zur Spindelachse verlaufenden Fläche erstreckt.

Dabei ist die Steifigkeit des Deformationselements maximal, wenn die Fläche mit der Spindelachse ungefähr einen rechten Winkel einschließt, während eine derartige Lösung problemlos eine Beweglichkeit in Richtung der Spindelachse zuläßt.

Im Rahmen der erfindungsgemäßen Lösung ist es denkbar, das Deformationselement als Flächentragwerk auszubilden, beispielsweise mit einer sich in der Fläche erstreckenden Gitterstruktur.

Eine besonders einfache konstruktive Lösung sieht vor, daß das Deformationselement sich ähnlich einer Membran in der Fläche erstreckt.

Besonders vorteilhaft wird die Lageraufnahme dann am Spindelgehäuse fixiert, wenn das Deformationselement radialsymmetrisch zur Spindelachse ausgebildet ist, dann kann auch die Deformation desselben zu keiner Veränderung der Position der Lageraufnahme quer zur Spindelachse führen.

Eine konstruktiv besonders einfache Realisierung sieht vor, daß das Deformationselement einen Membranring aufweist.

Eine derartige membranähnliche Ausbildung läßt sich in Richtung der Spindelachse dann besonders elastisch gestalten, wenn der Membranring mit Durchbrüchen versehen ist, so daß der Membranring seine radiale Steifheit durch zwischen den Durchbrüchen verbleibende Stege beibehält, während die Durchbrüche die Deformierbarkeit des Membranrings in Richtung der Spindelachse erleichtern.

Hinsichtlich der Fixierung des Deformationselements am Spindelgehäuse wurden im Zusammenhang mit der bisherigen Erläuterung der einzelnen Ausführungsformen keine näheren Angaben gemacht.

So sieht eine besonders günstige Lösung vor, daß das Deformationselement an einem mit dem Spindelgehäuse fest verbundenen Halteelement angreift, so daß die Fixierung am Spindelgehäuse selbst in einfacher Weise erfolgen kann.

Konstruktiv besonders einfach läßt sich dies dann lösen, wenn das Halteelement als Haltering ausgebildet ist.

Eine fertigungstechnisch besonders günstige Lösung sieht dabei vor, daß die Lageraufnahme, das Deformationselement und das Halteelement ein einstückiges Teil bilden, so daß diese Einheit besonders einfach gefertigt und montiert werden kann.

Hinsichtlich der Anordnung des Deformationselements relativ zur Lageraufnahme wurden bislang keine detaillierten Angaben gemacht. So wäre es beispielsweise denkbar, das Deformationselement in Richtung der Spindelachse gesehen vor oder hinter der Lageraufnahme anzuordnen.

Besonders hohe radiale Steifigkeit ist dann erhältlich, wenn das Deformationselement radial außenliegend zu der Lageraufnahme, insbesondere die Lageraufnahme umgebend, d. h. um die Lageraufnahme herum, angeordnet ist und somit in vorteilhafter Weise die Lageraufnahme unmittelbar in radialer Richtung zur Spindelachse abstützen kann.

Ferner ist die Stabilität zwischen Deformationselement und Halteelement in radialer Richtung dann besonders groß, wenn das Halteelement radial außenliegend zum Deformationselement angeordnet ist.

Im einfachsten Fall erstreckt sich das Deformationselement in radialer Richtung zwischen der Lageraufnahme und dem Halteelement.

Hinsichtlich der Ausbildung der Wälzlager wurden im Zusammenhang mit der bisherigen Erläuterung der einzelnen Ausführungsbeispiele keine näheren Angaben gemacht. Eine besonders vorteilhafte Lösung sieht dabei vor, daß die Wälzlager Schrägkugellager sind, wobei vorzugsweise die Schrägkugellager Kugeln aus Keramik aufweisen, die eine besonders hohe Laufgenauigkeit bei hohen Drehzahlen zulassen.

Hinsichtlich des Einbaus des Deformationselements sind im Rahmen der erfindungsgemäßen Lösungen unterschiedliche Möglichkeiten denkbar.

So ist es beispielsweise denkbar, das Deformationselement und die Lageraufnahme so einzubauen, daß das Deformationselement bei auf Betriebstemperatur befindlicher Arbeitsspindel keine in Richtung der Spindelachse wirkende Kräfte auf die Lageraufnahme ausübt.

Eine besonders vorteilhafte Lösung sieht dabei vor, daß das Deformationselement so eingebaut ist, daß es auch bei auf Betriebstemperatur befindlicher Arbeitsspindel mit einer parallel zur Spindelachse gerichteten Kraft in Richtung der vorderen Lagereinheit wirkt, um die vordere Lagereinheit bei der Aufnahme von Axialkräften zu unterstützen.

Darüber hinaus sieht ein besonders vorteilhaftes Ausführungsbeispiel der erfindungsgemäßen Arbeitsspindelanordnung vor, daß diese einen Spindelmotor umfaßt, wobei die Arbeitsspindel einen Rotor des Spindelmotors trägt.

Vorzugsweise ist dabei der Rotor zwischen der vorderen Lagereinheit und der hinteren Lagereinheit angeordnet.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: einen Längsschnitt durch eine erfindungsgemäße Arbeitsspindelanordnung und
- Fig. 2: einen Schnitt längs Linie 2-2 in Fig. 1

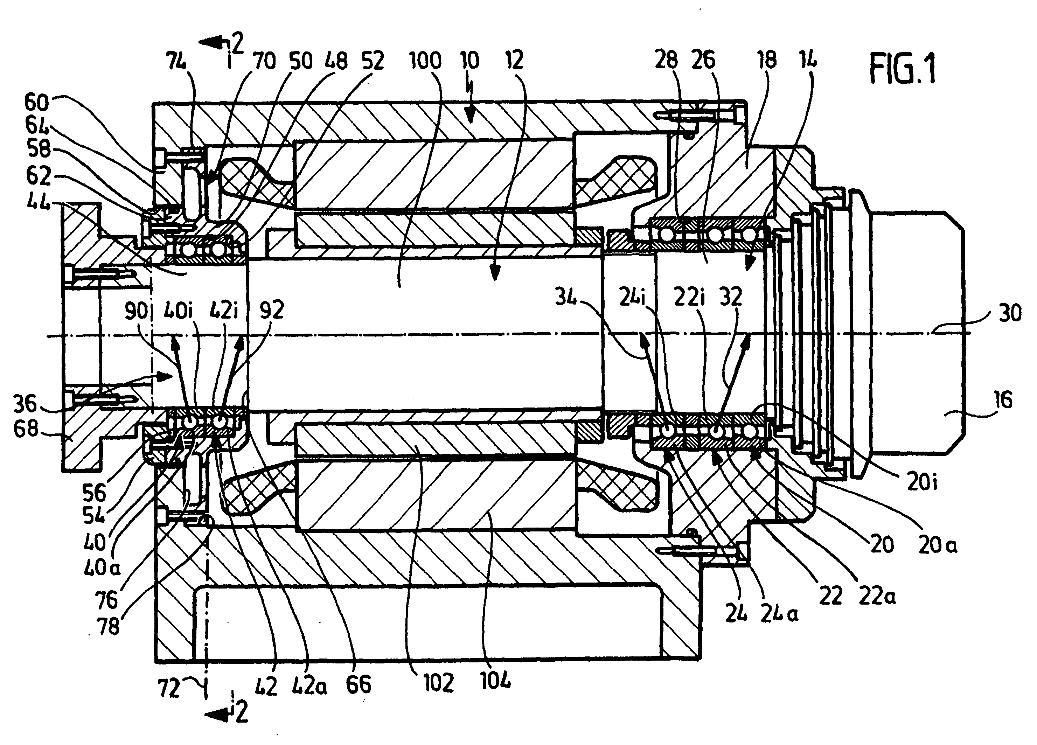

Ein in Fig. 1 dargestelltes erstes Ausführungsbeispiel einer erfindungsgemäßen Arbeitsspindelanordnung umfaßt ein als Ganzes mit 10 bezeichnetes Spindelgehäuse, in welchem eine als Ganzes mit 12 bezeichnete Arbeitsspindel drehbar gelagert ist.

Die Arbeitsspindel 12 weist vorzugsweise in einem vorderen Endbereich 14 eine Aufnahme 16 für ein Werkstück oder ein Werkzeug auf, welches durch die Arbeitsspindel 12 rotierend antreibbar ist.

Der vordere Endbereich 14 der Arbeitsspindel 12 ist dabei drehbar in einem vorderen Gehäusedeckel 18 des Spindelgehäuses 10 über eine vordere Lagereinheit aus insgesamt drei Schrägkugellagern 20, 22 und 24 drehbar gelagert, wobei die Schrägkugellager 20, 22 und 24 mit ihren inneren Lagerringen 20i, 22i und 24i unmittelbar auf einer Umfangsfläche 26 der Arbeitsspindel 12 am vorderen Endbereich 14 sitzen, während äußere Lagerringe 20a, 22a, 24a in einer zylindrischen Ausnehmung 28 im vorderen Gehäusedeckel 18 sitzen.

Die Schrägkugellager 20, 22 und 24 sind gegeneinander vorgespannt, so daß die Arbeitsspindel spielfrei um eine Spindelachse 30 drehbar und in Richtung der Spindelachse 30 spielfrei fixiert ist.

Vorzugsweise sind die Schrägkugellager 20, 22 und 24 so ausgebildet, daß die Schrägkugellager 20 und 22 ein Tandemlager bilden, bei welchem jeweils eine Normale 32 zu einer Lagerlauffläche in Richtung der Spindelachse 30 und ferner in Richtung der Aufnahme 16 gerichtet ist, während das Schrägkugellager 24, welches auf einer der Aufnahme 16 abgewandten Seite der Schrägkugellager 20 und 22 angeordnet ist, eine Normale 34 zur Lagerlauffläche aufweist, welche ebenfalls in Richtung der Spindelachse 30, jedoch in Richtung eines hinteren Endbereichs 36 der Arbeitsspindel 12 gerichtet ist, so daß bezüglich der Ausrichtung der Normalen 32 und 34 eine sogenannte 0-Anordnung entsteht.

Die Lagerung der Arbeitsspindel 12 im Abstand vom vorderen Endbereich 14, vorzugsweise an ihrem hinteren Endbereich 36, erfolgt durch eine hintere Lagereinheit umfassend zwei Schrägkugellager 40 und 42, deren Lagerinnenringe 40i auf einer zylindrischen Außenfläche 44 der Arbeitsspindel 12 im hinteren Endbereich 36 sitzen, während deren Lageraußenringe 40a und 42a in einer zylindrischen Ausnehmung 48 einer ringförmigen Lageraufnahme 50 sitzen, welcher auf einer dem vorderen Endbereich 14 zugewandten Seite eine Schulter 52 aufweist, an welcher der Lageraußenring 42a des Schrägkugellagers 42 anliegt, welcher auf einer dem vorderen Endbereich 14 zugewandten Seite des Schrägkugellagers 40 angeordnet ist.

Ferner liegen die Lageraußenringe 40a und 42a der Schrägkugellager 40 und 42 unmittelbar aneinander an und außerdem ist ein fest mit der Lageraufnahme 50 verbindbarer Abschlußring 54 vorgesehen, welcher seinerseits eine Schulter 56 aufweist, welche den Lageraußenring 40a des Schrägkugellagers 40 auf seiner dem Lageraußenring 42a abgewandten Seite beaufschlagt, so daß durch den Abschlußring 54 die Lageraußenringe 40a und 42a fest in der Lageraufnahme 50 fixiert sind.

Die Lageraufnahme 50 durchgreift ihrerseits einen Durchbruch 58 in einem hinteren Gehäusedeckel 60 und trägt zur Abdichtung des Spindelgehäuses 10 im Bereich des hinteren Gehäusedeckels 60 einen Ringwulst 62, der mit einer Dichtung 64 an dem Durchbruch 58 dichtend anliegt, jedoch eine Bewegbarkeit der Lageraufnahme 50 in Richtung der Spindelachse 30 relativ zum hinteren Gehäusedeckel 60 zuläßt.

Darüber hinaus sind auch die Lagerinnenringe 40i und 42i der Schrägkugellager 40 und 42 fest zwischen einer Schulter 66 der Arbeitsspindel 12 und einer am hinteren Endbereich 36 der Arbeitsspindel 12 fixierbaren und auf der Arbeitsspindel 12 drehfest sitzenden Buchse 68 eingespannt.

Zur Fixierung der Lageraufnahme 50 relativ zum Spindelgehäuse 10 ist diese einstückig mit einem Deformationselement 70 verbunden, welches vorzugsweise ähnlich einer Membran aus Flachmaterial mit geringer Wandstärke ausgebildet ist und sich in einer Fläche 72 ausgehend von der Lageraufnahme radial zur Spindelachse 30 nach außen erstreckt, wobei die Fläche 72 ungefähr senkrecht zur Spindelachse 30 verläuft.

Das Deformationselement 70 geht dann auf seiner der Lageraufnahme 50 abgewandten Außenseite in einen Haltering 74 über, welcher mit dem hinteren Gehäusedeckel 60 fest, beispielsweise durch lösbare Verbindungselemente verbindbar ist und sich dabei einerseits an einer senkrecht zur Spindelachse 30 verlaufenden Anlagefläche 76 axial und andererseits an einer zylindrisch zur Spindelachse 30 verlaufenden Innenschulter 78 des hinteren Gehäusedeckels 60 radial abstützt.

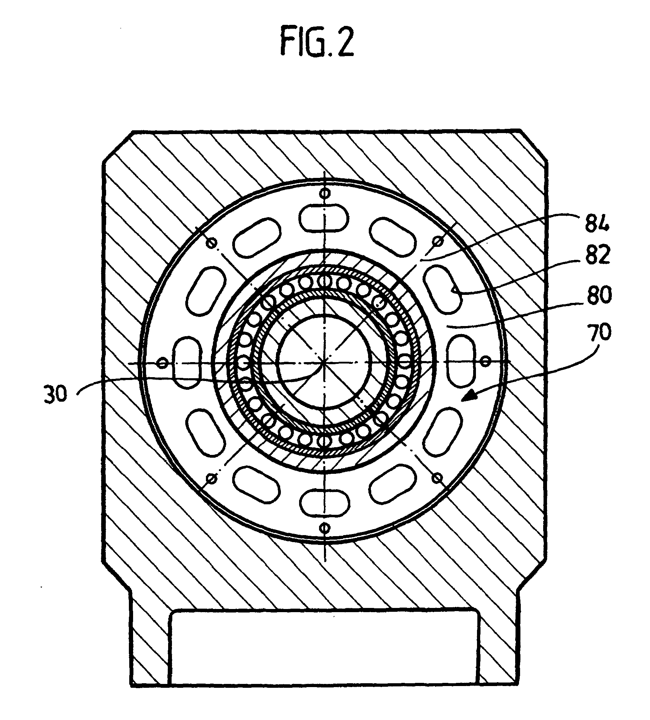

Vorzugsweise ist dabei das Deformationselement 70, wie in Fig. 2 dargestellt, so ausgebildet, daß dieses einen um die Lageraufnahme 50 auf einer Außenseite derselben umlaufenden Membranring 80 bildet, welcher aufgrund seiner geringen Materialstärke membranähnliche Eigenschaften aufweist. Damit ist die Lageraufnahme 50 relativ zum Haltering 74, welcher fest mit dem Spindelgehäuse 10 verbunden ist, in Richtung der Spindelachse geringfügig bewegbar, und dadurch in der Lage, Längenausdehnungen der Arbeitsspindel 12 zwischen dem vorderen Endbereich 14 und dem hinteren Endbereich 44, die beispielsweise im Verlauf einer Erwärmung der Arbeitsspindel 12 auf Betriebstemperatur auftreten, auszugleichen, beispielsweise dadurch, daß sich die Lageraufnahme 50 um die auftretende Längenausdehnung relativ zum Haltering 74 von dem vorderen Endbereich 14 wegbewegt.

Andererseits ist jedoch der Membranring 80 in radialer Richtung zur Spindelachse 30 steif und wirkt auch im Fall einer Deformation stets axialsymmetrisch zur Spindelachse 30, so daß die Schrägkugellager 40 und 42 relativ zum Spindelgehäuse 10 die Arbeitsspindel 12 in allen Betriebszuständen der Arbeitsspindel 12 und allen Deformationszuständen des Membranrings 80 quer zur Spindelachse 30 in exakt derselben Position lagern.

Vorzugsweise ist zur Erhöhung der Elastizität des Membranrings 80 in diesem eine Vielzahl von Durchbrüchen 82 vorgesehen, die vorzugsweise in konstanten Winkelabständen voneinander um die Spindelachse 30 herum angeordnet sind, so daß zwischen den Durchbrüchen 82 Stege 84 des Membranrings 80 verbleiben, die nach wie vor in radialer Richtung zur Spindelachse 30 steif sind, jedoch in Richtung der Spindelachse 30 eine erhöhte Elastizität aufweisen.

Ferner sind bei den Schrägkugellagern 40 und 42 Normalen 90 und 92 zu den Lagerlaufflächen derselben so ausgerichtet, daß sich eine sogenannte O-Anordnung ergibt, das heißt, daß die Normale des Schrägkugellagers 42 in Richtung des vorderen Endbereichs 14 weist, während die Normale 90 des Schrägkugellagers 40 in Richtung der Buchse 68 weist und beide Normalen 90 und 92 in Richtung der Spindelachse 30 gerichtet sind, allerdings aufgrund der O-Anordnung voneinander weg weisen.

Durch diese O-Anordnung der Schrägkugellager 40, 42 erfolgt eine Stabilisierung der Lageraufnahme 50 gegen ein Kippen um die Spindelachse 30 und somit hat die Lageraufnahme 50 im wesentlichen nur noch die Möglichkeit, sich aufgrund des Deformationselements 70 in Richtung der Spindelachse 30 zu bewegen.

Die Deformation des Deformationselements 70 durch Bewegen der Lageraufnahme 50 in Richtung der Spindelachse 30 führt zu auf die Lageraufnahme 50 wirkenden und im wesentlichen parallel zur Spindelachse 30 gerichteten Kräften, so daß die Möglichkeit besteht, die als einstückiges Teil gebildete Einheit aus Lageraufnahme 50, Deformationselement 70 und Haltering 74 so einzubauen, daß erst bei betriebswarmer Arbeitsspindel 12 keine Kräfte in Richtung der Spindelachse 30 wirken, während bei kalter Arbeitsspindel 12 eine zur Spindelachse 30 parallele Kraft wirksam ist.

Die erfindungsgemäße Arbeitsspindelanordnung ist insbesondere dann vorteilhaft, wenn die Arbeitsspindelanordnung einen Spindelmotor umfaßt, der zwischen der vorderen Lagereinheit 20, 22 und 24 und der hinteren Lagereinheit 40, 42 angeordnet ist.

Vorzugsweise sitzt bei einem derartigen Spindelmotor unmittelbar in einem mittleren Bereich 100 der Arbeitsspindel 12 auf dieser ein Rotor 102, welcher einem Stator 104 zugewandt ist, der fest mit dem Spindelgehäuse 10 verbunden ist und den Rotor 102 umschließt.

Aufgrund eines derartigen, auf der Arbeitsspindel 12 sitzenden Rotors 102 erfolgt in verstärktem Maße eine Erwärmung der Arbeitsspindel 12 und somit die Notwendigkeit, eine Längenausdehnung derselben zwischen dem vorderen Endbereich 14 und dem hinteren Endbereich 36 auszugleichen.

## Patentansprüche

1. Arbeitsspindelanordnung für eine Werkzeugmaschine, umfassend
ein Spindelgehäuse (10)
eine Arbeitsspindel (12)
eine vordere Lagereinheit, welche die Arbeitsspindel durch gegeneinander vorgespannte Wälzlager (20, 22, 24) um ihre Spindelachse (30) im wesentlichen spielfrei drehbar und in Richtung der Spindelachse (30) im wesentlichen spielfrei feststehend relativ zum Spindelgehäuse (10) lagert,
eine hintere Lagereinheit (40, 42), welche die Arbeitsspindel (12) im Abstand von der ersten Lagereinheit durch gegeneinander vorgespannte Wälzlager (40, 42) im wesentlichen spielfrei um die Spindelachse (30) drehbar, und in Richtung der Spindelachse (30) im wesentlichen spielfrei feststehend lagert wobei die Wälzlager (40, 42) mit ihren Lageraußenringen (40a, 42a) in einer Lageraufnahme (50) sitzen, welche aufgrund eines zwischen der Lageraufnahme (50) und dem Spindelgehäuse (10) wirksamen Deformationselement (70) relativ zum Spindelgehäuse (10) in Richtung der Spindelachse (30) bewegbar ist,
**dadurch gekennzeichnet, daß** das Deformationselement (70) und die Lageraufnahme (50) so eingebaut sind, daß das Deformationselement (70) bei kalter, nicht auf Betriebstemperatur befindlicher Arbeitsspindel (12) mit einer zur Spindelachse (30) parallelen Kraft auf die Arbeitsspindel (12) wirkt.

2. Arbeitsspindelanordnung nach Anspruch 1, **dadurch gekennzeichnet, daß** das Deformationselement (70) die Lageraufnahme (50) in radialer Richtung gegenüber dem Spindelgehäuse (10) im wesentlichen steif führt.

3. Arbeitsspindelanordnung nach Anspruch 2, **dadurch gekennzeichnet, daß** sich das Deformationselement (70) in einer quer zur Spindelachse (30) verlaufenden Fläche (72) erstreckt.

4. Arbeitsspindelanordnung nach Anspruch 3, **dadurch gekennzeichnet, daß** die Fläche (72) mit der Spindelachse (30) ungefähr einen rechten Winkel einschließt.

5. Arbeitsspindelanordnung nach Anspruch 3 oder 4, **dadurch gekennzeichnet, daß** sich das Deformationselement (70) ähnlich einer Membran in der Fläche (72) erstreckt.

6. Arbeitsspindelanordnung nach einem der voranstehenden Ansprüche, **dadurch gekennzeichnet, daß** das Deformationselement (70) radialsymmetrisch zur Spindelachse (30) ausgebildet ist.

7. Arbeitsspindelanordnung nach Anspruch 5 oder 6, **dadurch gekennzeichnet, daß** das Deformationselement (70) einen Membranring (80) aufweist.

8. Arbeitsspindelanordnung nach Anspruch 7, **dadurch gekennzeichnet, daß** der Membranring (80) mit Durchbrüchen (82) versehen ist.

9. Arbeitsspindelanordnung nach einem der voranstehenden Ansprüche, **dadurch gekennzeichnet, daß** das Deformationselement (70) an einem mit dem Spindelgehäuse (10) fest verbundenen Halteelement (74) angreift.

10. Arbeitsspindelanordnung nach Anspruch 9, **dadurch gekennzeichnet, daß** das Halteelement als Haltering (74) ausgebildet ist.

11. Arbeitsspindelanordnung nach Anspruch 9 oder 10, **dadurch gekennzeichnet, daß** die Lageraufnahme (50) das Deformationselement (70) und das Halteelement (74) ein einstückiges Teil bilden.

12. Arbeitsspindelanordnung nach einem der voranstehenden Ansprüche, **dadurch gekennzeichnet, daß** das Deformationselement (70) radial außenliegend zur Lageraufnahme (50) angeordnet ist.

13. Arbeitsspindelanordnung nach Anspruch 12, **dadurch gekennzeichnet, daß** das Deformationselement (70) die Lageraufnahme (50) umgebend angeordnet ist.

14. Arbeitsspindelanordnung nach einem der Ansprüche 9 bis 13, **dadurch gekennzeichnet, daß** das Halteelement (74) radial außenliegend zum Deformationselement (70) angeordnet ist.

15. Arbeitsspindelanordnung nach einem der voranstehenden Ansprüche, **dadurch gekennzeichnet, daß** die Wälzlager (40, 42) Schrägkugellager sind.

16. Arbeitsspindelanordnung nach einem der voranstehenden Ansprüche, **dadurch gekennzeichnet, daß** das Deformationselement (70) und die Lageraufnahme (50) so eingebaut sind, daß das Deformationselement (70) bei auf Betriebstemperatur befindlicher Arbeitsspindel (12) in Richtung der Spindelachse (30) kräftefrei auf die Lageraufnahme wirkt.

17. Arbeitsspindelanordnung nach einem der voranstehenden Ansprüche, **dadurch gekennzeichnet, daß** das Deformationselement (70) so eingebaut ist, daß es bei auf Betriebstemperatur befindlicher Arbeitsspindel (12) mit einer parallel zur Spindelachse (30) gerichteten Kraft in Richtung der vorderen Lagereinheit (20, 22, 24) wirkt.

## Claims

1. Work spindle arrangement for a machine tool, comprising
a spindle housing (10),
a work spindle (12),
a front bearing unit which by means of roller bearings (20, 22, 24) pretensioned relative to one another mounts the work spindle rotatably about its spindle axis (30) substantially free from play and stationarily in the direction of the spindle axis (30) substantially free from play relative to the spindle housing (10),
a rear bearing unit (40, 42) which by means of roller bearings (40, 42) pretensioned relative to one another mounts the work spindle (12) at a distance from the first bearing unit rotatably about the spindle axis (30) substantially free from play and stationarily in the direction of the spindle axis (30) substantially free from play, the roller bearings (40, 42) being seated with their bearing outer rings (40a, 42a) in a bearing seat (50) which owing to a deformation element (70) effective between the bearing seat (50) and the spindle housing (10) is movable in the direction of the spindle axis (30) relative to the spindle housing (10),
**characterized in that** the deformation element (70) and the bearing seat (50) are installed such that when the work spindle (12) is cold and not at operating temperature, the deformation element (70) acts on the work spindle (12) with a force parallel to the spindle axis (30).

2. Work spindle arrangement in accordance with claim 1, **characterized in that** the deformation element (70) guides the bearing seat (50) substantially rigidly in radial direction relative to the spindle housing (10).

3. Work spindle arrangement in accordance with claim 2, **characterized in that** the deformation element (70) extends in a surface (72) extending transversely to the spindle axis (30).

4. Work spindle arrangement in accordance with claim 3, **characterized in that** the surface (72) forms approximately a right angle with the spindle axis (30).

5. Work spindle arrangement in accordance with claim 3 or 4, **characterized in that** the deformation element (70) extends similarly to a membrane in the surface (72).

6. Work spindle arrangement in accordance with any one of the preceding claims, **characterized in that** the deformation element (70) is formed radially symmetrically in relation to the spindle axis (30).

7. Work spindle arrangement in accordance with claim 5 or 6, **characterized in that** the deformation element (70) comprises a membrane ring (80).

8. Work spindle arrangement in accordance with claim 7, **characterized in that** the membrane ring (80) has openings (82) provided therein.

9. Work spindle arrangement in accordance with any one of the preceding claims, **characterized in that** the deformation element (70) engages a holding element (74) which is fixedly connected to the spindle housing (10).

10. Work spindle arrangement in accordance with claim 9, **characterized in that** the holding element is in the form of a holding ring (74).

11. Work spindle arrangement in accordance with claim 9 or 10, **characterized in that** the bearing seat (50), the deformation element (70) and the holding element (74) form an integral part.

12. Work spindle arrangement in accordance with any one of the preceding claims, **characterized in that** the deformation element (70) is arranged radially outwardly in relation to the bearing seat (50).

13. Work spindle arrangement in accordance with claim 12, **characterized in that** the deformation element (70) is arranged so as to surround the bearing seat (50).

14. Work spindle arrangement in accordance with any one of claims 9 to 13, **characterized in that** the holding element (74) is arranged radially outwardly in relation to the deformation element (70).

15. Work spindle arrangement in accordance with any one of the preceding claims, **characterized in that** the roller bearings (40, 42) are angular ball bearings.

16. Work spindle arrangement in accordance with any one of the preceding claims, **characterized in that** the deformation element (70) and the bearing seat (50) are installed such that when the work spindle (12) is at operating temperature, the deformation element (70) acts free from forces on the bearing seat in the direction of the spindle axis (30).

17. Work spindle arrangement in accordance with any one of the preceding claims, **characterized in that** the deformation element (70) is installed such that when the work spindle (12) is at operating temperature, it acts in the direction of the front bearing unit (20, 22, 24) with a force directed parallel to the spindle axis (30).

## Revendications

1. Dispositif de broche principale pour une machine-outil, comprenant :
■ un boîtier de broche (10),
■ une broche principale (12),
■ une unité de palier avant, qui est logée de façon à pouvoir faire tourner sensiblement sans jeu la broche principale par des paliers de roulement (20, 22, 24) pré-tendus les uns par rapport aux autres autour de leur axe de broche (30) et est logée en direction de l'axe de broche (30) sensiblement sans jeu de façon fixe par rapport au boîtier de broche (10),
■ une unité de palier (40, 42) arrière, qui est logée de façon à pouvoir faire tourner la broche principale (12) à distance de la première unité de palier par des paliers de roulement (40, 42) pré-tendus les uns par rapport aux autres sensiblement sans jeu autour de l'axe de broche (30) et est logée de façon fixe sensiblement sans jeu en direction de l'axe de broche (30), les paliers de roulement (40, 42) repo-sant avec leurs bagues extérieures de palier (40a, 42a) dans un logement de palier (50) qui, compte tenu d'un élément de déformation (70) actif entre le loge-ment de palier (50) et le boîtier de broche (10), peut être déplacé par rapport au boîtier de broche (10) en direction de l'axe de broche (30),
**caractérisé en ce que** l'élément de déformation (70) et le logement de palier (50) sont montés de telle sorte que l'élément de déformation (70) agit avec une force parallèle à l'axe de broche (30) sur la broche principale (12) lorsque la broche principale (12) est plus froide et ne se trouve à pas la température de service.

2. Dispositif de broche principale selon la revendication 1, **caractérisé en ce que** l'élément de déformation (70) guide le logement de palier (50) de façon sensiblement rigide dans la direction radiale par rapport au boîtier de broche (10).

3. Dispositif de broche principale selon la revendication 2, **caractérisé en ce que** l'élément de déformation (70) s'étend dans une surface (72) agencée transversalement à l'axe de broche (30).

4. Dispositif de broche principale selon la revendication 3, **caractérisé en ce que** la surface (72) forme à peu près un angle droit par rapport à l'axe de broche (30).

5. Dispositif de broche principale selon la revendication 3 ou 4, **caractérisé en ce que** l'élément de déformation (70) s'étend à la façon d'une membrane dans la surface (72).

6. Dispositif de broche principale selon l'une quelconque des revendications précédentes, **caractérisé en ce que** l'élément de déformation (70) est conçu selon une symétrie radiale par rapport à l'axe de broche (30).

7. Dispositif de broche principale selon la revendication 5 ou 6, **caractérisé en ce que** l'élément de déformation (70) présente une bague de membrane (80).

8. Dispositif de broche principale selon la revendication 7, **caractérisé en ce que** la bague de membrane (80) est pourvue de passages (82).

9. Dispositif de broche principale selon l'une quelconque des revendications précédentes, **caractérisé en ce que** l'élément de déformation (70) s'applique sur un élément de retenue (74) relié de façon fixe au boîtier de broche (10).

10. Dispositif de broche principale selon la revendication 9, **caractérisé en ce que** l'élément de retenue est conçu comme une bague de retenue (74).

11. Dispositif de broche principale selon la revendication 9 ou 10, **caractérisé en ce que** le logement de palier (50) de l'élément de déformation (70) et l'élément de retenue (74) forment une pièce d'un seul tenant.

12. Dispositif de broche principale selon l'une quelconque des revendications précédentes, **caractérisé en ce que** l'élément de déformation (70) est disposé radialement à l'extérieur par rapport au logement de palier (50).

13. Dispositif de broche principale selon la revendication 12, **caractérisé en ce que** l'élément de déformation (70) est disposé en entourant le logement de palier (50).

14. Dispositif de broche principale selon l'une quelconque des revendications 9 à 13, **caractérisé en ce que** l'élément de retenue (74) est disposé radialement à l'extérieur par rapport à l'élément de déformation (70).

15. Dispositif de broche principale selon l'une quelconque des revendications précédentes, **caractérisé en ce que** les paliers de roulement (40, 42) sont des paliers à billes obliques.

16. Dispositif de broche principale selon l'une quelconque des revendications précédentes, **caractérisé en ce que** l'élément de déformation (70) et le logement de palier (50) sont montés de telle sorte que l'élément de déformation (70) agit sans force sur le logement de palier en direction de l'axe de broche (30) lorsque la broche principale (12) se trouve à la température de service.

17. Dispositif de broche principale selon l'une quelconque des revendications précédentes, **caractérisé en ce que** l'élément de déformation (70) est monté de telle sorte qu'il agit avec une force orientée parallèlement à l'axe de broche (30) en direction de l'unité de palier avant (20, 22, 24) lorsque la broche principale (12) se trouve à la température de service.
